# EUROPÄISCHE PATENTSCHRIFT

(11) **EP 2 413 743 B1**
(45) Veröffentlichungstag und Bekanntmachung des Hinweises auf die Patenterteilung: **23.04.2014**
(21) Anmeldenummer: 10712357.2
(22) Anmeldetag: 31.03.2010
(51) Int. Cl.: A47C 3/12, A47C 27/08, A47C 31/00, A47C 31/12, B60N 2/64, B60N 2/44

(54) **VERFAHREN ZUR ERZEUGUNG EINER TRAGSCHALE UND EINER POLSTERAUFLAGE FÜR EINEN SITZ FÜR EIN FAHRZEUG**
PROCESS FOR PRODUCING A SUPPORTING SHELL AND AN UPHOLSTERY CUSHION FOR A SEAT FOR A VEHICLE
PROCÉDÉ DE PRODUCTION D'UNE COQUE SUPPORT ET D'UN COUSSIN DE REMBOURRAGE POUR UN SIÈGE POUR UN VEHICULE

(30) Priorität: 02.04.2009 DE 102009016051
(43) Veröffentlichungstag der Anmeldung: 08.02.2012
(73) Patentinhaber: Bayerische Motoren Werke Aktiengesellschaft, 80809 München (DE)
(72) Erfinder: FRANZ, Matthias, 83098 Brannenburg (DE); DURT, Alexander, 82266 Inning (DE); KILINCSOY, Uemit, 92331 Lupburg (DE); VINK, Peter, NL-2231 LE Rijnsburg (NL)
(74) Vertreter: Schernhammer, Herbert
(86) Internationale Anmeldenummer: PCT/EP2010/002075
(87) Internationale Veröffentlichungsnummer: WO 2010/112219

(56) Entgegenhaltungen:
- WO-A1-99/33380
- DE-A1- 10 240 462
- DE-A1- 19 601 972
- DE-A1- 19 910 427
- US-A- 2 847 061
- US-A- 3 081 129
- US-A- 4 852 945
- US-A- 4 972 351

## Beschreibung

Die Erfindung betrifft ein Verfahren zur Erzeugung einer Tragschale für einen Sitz sowie ein Verfahren zur Erzeugung einer Polsterauflage für einen Sitz.

Bekannte Sitze bestehen im Wesentlichen aus einer Tragstruktur für die Sitzfläche und für die Rückenlehne, die jeweils mit einer Polsterauflage versehen ist. Sitze, wie beispielsweise Bürostühle oder Sitze in Kraftfahrzeugen, weisen Verstellmöglichkeiten auf, um den Sitz an den jeweiligen Sitzbenutzer anpassen zu können. So kann zum Beispiel die Neigung der Sitzfläche und/oder der Rückenlehne verstellt werden. Auch sind weitere Verstelleinrichtungen, insbesondere in der Rückenlehne, bekannt, wie beispielsweise eine Lehnenbreitenverstellung, eine Lordosenstütze, eine horizontal verlaufende Knickachse etc. Diese bekannten Verstelleinrichtungen sollen eine möglichst gute Anpassung des Sitzes an den jeweiligen Sitzbenutzer ermöglichen.

Grundsätzlich wird ein Maximum an Sitzkomfort dann erreicht, wenn die Kontur der Sitzfläche und/oder der Rückenlehne des Sitzes möglichst weitreichend mit der physiologischen Form des Sitzbenutzers übereinstimmt.

Die Kontur bekannter Sitze entspricht jedoch nur bedingt der Körperform der verschiedenen in Frage kommenden Sitzbenutzer, unter Berücksichtigung der gewünschten (und im Fall eines Sitzes für ein Kraftfahrzeug zum Erfüllen der Fahraufgabe erforderlichen) Bewegungsfreiheit. Um dennoch einen guten Anlagekomfort zu erzielen, sind die bekannten Sitze im Bereich der Sitzfläche und/oder der Rückenlehne mit Polsterauflagen versehen, die vergleichsweise große Schaumstärken aufweisen, um die Inkongruenz zwischen der Kontur der Sitzfläche und/oder der Rückenlehne einerseits und dem Körper des Sitzbenutzers andererseits auszugleichen. Diese Polsterauflagen benötigen aufgrund der Dicke des Polsterschaumes einen vergleichsweise großen Bauraum.

Aus der US 3,081,129 ist ein Sitz bekannt, dessen Sitzfläche und Rückenlehne von einer Vielzahl federbelasteter Stempel gebildet wird. Durch das Einsitzen von Probanden werden die Stempel in unterschiedlicher Weise eingedrückt und in dieser belasteten Position fixiert. Nach jedem Einsitzen eines Probanden wird die Sitzkontur erfasst. Abschließend werden die unterschiedlichen Sitzkonturen durch ein Mittelungsvertahren in eine vereinheitlichte Kontur überführt. Nachteilig bei dem bekannten Sitz ist die geringe Genauigkeit durch die Rasterung der Stempel und die VerstellbarKeit der Stempel ausschließlich in einer Richtung senkrecht zur Sitzfläche bzw. Rückenlehne.

Aufgabe der vorliegenden Erfindung ist es, ein Verfahren anzugeben, mit dem die Voraussetzung geschaffen wird, um einen Sitz für ein Fahrzeug herstellen zu können, der einen hohen Sitzkomfort bei geringem Bauraumbedarf aufweist.

Diese Aufgabe wird durch ein Verfahren mit den Merkmalen des Anspruchs 1 oder durch ein Verfahren mit den Merkmalen des Anspruchs 2 gelöst. Die Ansprüche 9 und 12 betreffen Sitze, die unter Rückgriff auf die erfindungsgemäßen Verfahren hergestellt ist.

Kerngedanke der Erfindung nach Anspruch 1 ist es, dem tragenden Unterbau des Sitzes eine Form zu geben, die der Körperform der Mehrzahl der in Frage kommenden Sitzbenutzer möglichst nahe kommt, so dass aufgrund der guten Passform des tragenden Unterbaus nur noch eine vergleichsweise dünne Polsterauflage erforderlich ist, um einen guten Sitzkomfort zu erreichen. Dieser tragende Unterbau wird nachfolgend im Zusammenhang mit der vorliegenden Erfindung als "Tragschäle" bezeichnet.

Kerngedanke der Erfindung nach Anspruch 2 ist es, der Polsterauflage des Sitzes eine Form zu geben, die der Körperform der Mehrzahl der in Frage kommenden Sitzbenutzer möglichst nahe kommt, so dass die Polsterauflage aufgrund ihrer guten Passform vergleichsweise dünn gestaltet sein kann und dabei ein sehr guter Sitzkomfort erreicht wird. Der tragende Unterbau des Sitzes kann hierbei annähernd ebenflächig sein oder eine dreidimensionale Konturierung aufweisen.

Bei den erfindungsgemäßen Verfahren wird auf ein Sitzgestell, das ebene und ungepolsterte Auflageflächen für die Sitzfläche und/oder die Rückenlehne aufweist, eine Messmatte aufgelegt. Die Messmatte ist räumlich flexibel und weist eine geringe Eigensteifigkeit auf, so dass sie unter der Einwirkung des Körpergewichts (vor allem an der Sitzfläche) und des Anlagedrucks (vor allem an der Rückenlehne) eines Probanden sich ohne nennenswerten Widerstand an dessen Körperform angleicht. Eine derartige Messmatte ist in ähnlicher Form aus der DE 196 01 972 C2 bekannt. Die bekannte Messmatte, ist als Hohlkörper mit biegeschlaffen Begrenzungswänden ausgebildet und weist in ihrem Inneren beispielsweise eine Vielzahl kleiner kugelförmiger Festkörper auf, die mit geringem Kraftaufwand gegeneinander verschoben werden können. Durch Anlegen von Unterdruck können die Festkörper in ihrer Lage fixiert werden, so dass eine durch den Probanden erzeugte Oberflächenkontur der Messmatte "eingefroren" wird. Nach dem Verlassen der Messmatte bleibt die vom Probanden erzeugte Oberflächenkontur aufgrund des angelegten Unterdrucks erhalten. Erfindungsgemäß wird die erzeugte Oberflächenkontur an der Messmatte beispielsweise mit einem Mehrkoordinaten-Messgerät erfasst. Die derart gescannten Daten der Oberflächenkontur der Messmatte werden in einer Rechnereinheit gespeichert. Damit ist eine Einsitzmessung mit einem Probanden abgeschlossen.

Das Sitzgestell zur Aufnahme der Messmatte kann eine Einrichtung zur Veränderung des Winkels zwischen Rückenlehne und Sitzfläche aufweisen. Alternativ kann die Konstruktionslage des Sitzes durch ein Sitzgestell mit fest vorgegebenem Winkel zwischen Rückenlehne und Sitzfläche abgebildet werden.

Bei der Einsitzmessung wird, wie oben ausgeführt, die Messmatte durch das bloße Einsitzen infolge des Körpergewichts und infolge des statischen Anlagedrucks des Probanden verformt. Die Einsitzmessung wird erfindungsgemäß, je nach Art des Sitzes, um eine "dynamische Komponente" ergänzt, indem der Proband typische Bewegungen eines Sitzbenutzers ausführt, die die notwendige Bewegungsfreiheit des Sitzbenutzers widerspiegeln. Im Fall eines Sitzes für ein Kraftfahrzeug sind dies Bewegungen, die ein Fahrzeuglenker zur Erfüllung seiner Fahraufgabe vollführen muss, wie beispielsweise Lenken, Gas geben, Bremsen etc.

Die Einsitzmessungen werden mit einer Mehrzahl von Probanden unterschiedlicher Körpergröße, unterschiedlichen Gewichts und unterschiedlichen Körperbaus wiederholt, wobei nach Möglichkeit der gesamte Bereich von der so genannten "5%-Frau" bis zum so genannten "95%-Mann" abgedeckt wird. Die sich bei jedem Probanden ergebende Oberflächenkontur der Messmatte wird gemessen und in der Rechnereinheit abgelegt.

Nach dem Abschluss der Einsitzmessungen werden die "gemessenen Oberflächenkonturen" aller Probanden überlagert und eine "gemittelte Oberflächenkontur" errechnet.

Das erfindungsgemäße Verfahren unterscheidet sich grundlegend von dem Verfahren, das aus der DE 196 01 972 C2 bekannt ist. Die DE 196 01 972 C2 betrifft ein Verfahren zur Erfassung der Oberflächenkontur eines elastischen Polsters eines Sitzes, die sich unter der Einwirkung einer auf dem Polster sitzenden Person ergibt. Um die Oberflächenkontur des Polsters erfassen zu können, wird eine Messmatte sehr geringer Lagenstärke verwendet, die das Einsitzverhalten praktisch nicht verändert und mit ihrer Kontur die Oberflächenkontur des darunter liegenden elastisch verformten Polsters widerspiegelt.

Demgegenüber wird erfindungsgemäß auf einem ungepolsterten ebenflächigen Sitzgestell unter Verwendung einer Messmatte, deren Dicke so ausreichend bemessen ist, dass die Messmatte eine Polsterung ersetzt und sich vollständig an die Kontur des Sitzbenutzers angleicht, durch Einsitzmessungen mit unterschiedlichen Probanden eine Schar von Oberflächenkonturen erzeugt, die durch Überlagerung zu einer gemittelten Oberflächenkontur führen, die als Grundlage für die Konstruktion einer Tragstruktur für einen Sitz mit möglichst dünner Polsterauflage bzw. als Grundlage für die Konstruktion einer passgenauen Polsterauflage dient.

Die Überlagerung der gemessenen Oberflächenkonturen, nachfolgend als "Scans" bezeichnet, erfolgt im Wesentlichen in drei Schritten.

In einem ersten Schritt wird ein Abschnitt der Anlagefläche des Sitzbenutzers mit dem Sitz festgelegt, in dem die Scans zueinander ausgerichtet werden sollen. Grundsätzlich eignet sich hierfür jeder Abschnitt der Anlagefläche. In besonderer Weise sind jedoch solche Abschnitte der Anlagefläche geeignet, bei denen die geometrische Form der Scans und die Raumkoordinaten der Scans möglichst wenig voneinander abweichen. Wie Untersuchungen ergeben haben, liegen im Bereich der von den Probanden erzeugten Gesäßmulden (Beckenbereich) und im Bereich des unteren Rückenabschnitts (Bereich der Lendenwirbelsäule) vergleichsweise große geometrische Ähnlichkeiten und vergleichsweise geringe Abweichungen in den Raumkoordinaten vor. Die Ausrichtung der Scans am ausgewählten Abschnitt bedeutet eine Ausrichtung an den Übereinstimmungen in der Geometrie dieses ausgewählten Abschnitts ("best-fit"-Methode) und damit eine Verschiebung der Scans aus ihrer tatsächlichen gemessenen räumlichen Lage in eine gemeinsame Ebene. Dieses Vorgehen bedeutet im Beispiel des Bereichs der Gesäßmulden, dass die von der "5%-Frau" erzeugte Oberflächenkontur in Richtung der Hochachse des Sitzes auf das "Niveau" des "95%-Manns" verschoben wird (oder umgekehrt), bis beide Gesäßmulden in einer Ebene liegen. Durch Ausrichtung aller Scans nach diesem "best-fit"-Verfahren werden also Oberflächen konturen ungeachtet ihrer gemessenen Lage im Raum ausschließlich anhand ihrer Form verschoben, wobei zusammen mit dem ausgewählten Abschnitt (z. B. Gesäßmulde) natürlich auch die übrigen Abschnitte (z. B. der Schulterbereich) verschoben wird.

In einem zweiten Schritt werden die derart ausgerichteten Scans arithmetisch gemittelt. Mit einer aus CAD-Programmen (beispielsweise aus dem CATIA-Programm) bekannten Mittelungsfunktion wird die "gemittelte Oberflächenkontur" aus allen gemessenen Scans errechnet. Die Grundlage hierfür bilden die als Punktwolken gemessenen jeweiligen Oberflächenkonturen, deren Einzelpunkte vom CAD-Programm mit Polygonen versehen werden, in Form von Dreiecksflächen jeweils dreier benachbarter Punkte. Aus diesem Verbund von Dreiecksflächen wird über eine Flächenerzeugungsfunktion eine glatte Fläche generiert. Die Mittelung aus den einzelnen gemessenen Oberflächenkonturen erfolgt rechnerisch und erfasst bevorzugt die gesamte Anlagefläche des Sitzbenutzers mit dem Sitz.

Im dritten und letzten Schritt wird die gemittelte Oberflächenkontur geringfügig in zumindest einer Raumrichtung aufgeweitet, woraus eine "modifizierte Oberflächenkontur" entsteht. Am Beispiel des Bereichs der Gesäßmulden erläutert, bedeutet dies, dass die gemittelte Oberflächenkontur zumindest in Querrichtung des Sitzes etwas in Richtung der äußeren Begrenzungslinie der Kurvenschar verschoben wird.

Die Verschiebung ("Offset") bemisst sich im Fall der Erzeugung einer Tragschale nach der Dicke der Auflage, die auf die dem Sitzbenutzer zugewandte Seite der Tragschale aufgebracht wird. Die Dicke der Auflage ist in der Regel über der Erstreckung von Sitzfläche und/oder Rückenlehne unterschiedlich. Der Offset ist erforderlich, um dem "95%-Mann" zu ermöglichen, innerhalb der später an der Tragschale realisierten Kontur der Gesäßmulde ausreichend Platz zu finden, ohne dass es dem "95%-Mann" "zu eng wird". Die Auflage auf der Tragschale dient als "Komfortschicht" und weist als wesentlichen Bestandteil ein Polsterungsmaterial auf, wie beispielsweise einen Schaumstoff. Die Aufweitung der gemittelten Oberflächenkontur erfasst zumindest einen erheblichen Teil der Sitzanlagefläche.

Der Offset ist im Fall der Erzeugung einer Polsterauflage von verschiedenen Faktoren abhängig, wie beispielsweise der Schaumhärte der Polsterauflage. Grundsätzlich kann der Offset auch entfallen oder sehr gering ausfallen, da die Aufweitung der gemittelten Oberflächenkontur gegebenenfalls bereits in zufriedenstellendem Ausmaß durch die Nachgiebigkeit der Polsterauflage erreicht werden kann.

Die Aufweitung ist nicht im Sinn einer gleichmäßigen, linearen "Vergrößerung" der gemittelten Oberflächenkontur zu verstehen, sondern vielmehr als ein Offset in Richtung der oberen Perzentile aller gemessenen Oberflächenkonturen, wobei der Offset entlang des Sitzes mehr oder weniger stark von einer linearen und gleichmäßigen Vergrößerung abweichen kann. Das Offset-Maß entlang der Höhen- und der Breitenerstreckung der gemessenen Oberflächenkontur wird beispielsweise von einer Auswerteperson festgelegt, unter Berücksichtigung anatomischer und ergonomischer Kriterien.

Beispielsweise kann die Aufweitung zumindest in Teilbereichen von Sitzkissen und/oder Rückenlehne bis zum Maß einer "80%-Oberflächenkontur" erfolgen. Da die größten Oberflächenkonturen auf sehr große und/oder sehr korpulente Probanden zurück gehen, für die auch konventionelle Sitze zu eng sind, würde eine Aufweitung über das "80%-Maß" hinaus den Sitzkomfort für kleinere und/oder schmälere Sitzbenutzer verschlechtern, da diese Sitzbenutzer auf dem Sitzkissen und/oder an der Rückenlehne dann nur unzureichenden (Seiten-)Halt finden würden.

Grundsätzlich kann, zumindest in Teilbereichen, auch eine Stauchung der gemittelten Oberflächenkontur erfolgen.

Im Unterschied zu einer individuell an einen einzigen Sitzbenutzer angepassten Sitzschale, wie dies beispielsweise aus Rennsport-Fahrzeugen bekannt ist, bedeutet das erfindungsgemäße Verfahren naturgemäß einen Kompromiss, da die gemessenen Oberflächenkonturen "verwaschen" und verzerrt werden. Dennoch bildet die derart durch Überlagerung der gemessenen Oberflächenkonturen erfindungsgemäß erzeugte Tragschale bzw. Polsterauflage - trotz der Unterschiede in der Größe, im Gewicht und im Körperbau der Probanden - für alle in Frage kommenden Sitzbenutzer eine erstaunlich gut passende Anlagefläche an Sitzfläche und/oder Rückenlehne.

Im bevorzugten Fall der Gesäßmulden als gemeinsamem Abschnitt der Anlagefläche lässt sich diese gute Passform unter anderem durch die unterschiedlichen Beckenformen von Mann und Frau erklären. Da das weibliche Becken in Relation zum männlichen Becken breiter ist und somit die Breite der Gesäßmulde trotz der im Mittel geringeren Körpergröße und des im Mittel geringeren Körpergewichts von Frauen gegenüber Männern in einem vergleichsweise engen Bereich liegt, ergibt sich die oben beschriebene gute Passform der erfindungsgemäß erzeugten Tragschale.

Ebenso eignet sich der zur Gesäßmulde benachbarte untere Abschnitt des Rückens als ausgewählter Bereich für die Überlagerung der gemessenen Oberflächenkonturen.

Bei dieser bevorzugten Ausgestaltung des erfindungsgemäßen Verfahrens mit Referenz im Bereich der Gesäßmulde oder des unteren Bereichs des Rückens wird der Rücken in seinem mittleren und vor allem in seinem oberen Bereich bei der Mehrzahl der Probanden in Hochachse des Sitzes verschoben. Dies kann jedoch im Fall der Erzeugung einer Tragschale durch eine geringere Konturierung der Tragschale im Rückenbereich in Verbindung mit einer dickeren Auflage (Polsterschicht) ohne weiteres kompensiert werden. Im Fall der Erzeugung einer Polsterauflage wird die Dicke der Polsterauflage im Rückenbereich etwas erhöht. In der Regel wird in beiden Fällen auf eine herkömmliche Lordosenstütze im Sinn einer separat anzusteuernden volumenveränderlichen Blase verzichtet, da die Höhenlage einer solchen Lordosenstütze nicht für alle in Frage kommenden Sitzbenutzer passend wäre.

Die Erfindung unterscheidet sich außerdem grundsätzlich von bekannten Sitzen, die in Ausnehmungen der Sitzpolsterung so genannte "Vakuumkissen" mit rieselfähigem Schüttgut aufweisen, wie beispielsweise in der DE 199 10 427 A1 oder der DE 695 05 131 T2 beschrieben. Auch Sitze mit aufgelegten Taschen, die Schaumpolster aus einem offenzelligen, selbstaufblasenden Polsterschaum aufweisen (DE 10 2004 013 674 A1) sowie Sitze, die Polster mit einem losen Füllmaterial und/oder mit einem Fluid aufweisen, das durch Anlegen magnetischer oder elektrischer Felder, durch das Anlegen elektrischen Stroms, durch Erwärmung oder durch hydraulische Anregung umverteilbar ist (DE 10 2006 032 891 A1), sind fernab der Erfindung.

In einer vorteilhaften Ausgestaltung der Erfindung dient die Tragschale bzw. die Polsterauflage der Herstellung eines Sitzes für ein Fahrzeug. Dementsprechend werden die Messreihen mit Probanden durchgeführt, die in einer Haltung einsitzen, die der Sitzhaltung in dem Fahrzeug entspricht, für das der Sitz bestimmt ist. Wie bereits oben erwähnt, führen die Probanden dabei bevorzugt auch Bewegungen zur Erfüllung der Fahraufgabe oder andere für den Aufenthalt in einem Fahrzeug typische Bewegung aus.

Bei der Konstruktion eines Fahrzeugsitzes kann der CAD-Datensatz der Tragschale bzw. der Polsterauflage in CAD-Programmen herangezogen werden.

Sitze, die unter Verwendung einer nach dem erfindungsgemäßen Verfahren erzeugten Tragschale hergestellt sind, können mit einer sehr dünnen polsternden Auflage versehen werden und haben dennoch einen sehr guten Sitzkomfort, da die Auflage aufgrund der guten Passform der Tragschale nur geringe "Abweichungen" der Form der Tragschale von der Körperform ausgleichen muss. Hieraus ergeben sich ein geringer Bauraum und ein geringes Gewicht des Sitzes.

In einer vorteilhaften Ausführung der Erfindung ist die Auflage als fluiddichte Hülle mit einem im Inneren der Hülle angeordneten Abstandsgebilde ausgebildet. Das Abstandsgebilde besteht aus parallel zueinander angeordneten Gewirkelagen, die durch Abstandsfäden miteinander verbunden sind. Die Hülle weist eine Schlauchleitung oder einen Anschluss für eine Schlauchleitung auf, um die Menge des Fluids im Inneren der Hülle beeinflussen zu können. Eine derartige Auflage ist in der Patentanmeldung der Anmelderin mit dem Titel "Auflage für einen Sitz" beschrieben. Der Offenbarungsgehalt dieser Patentanmeldung, die denselben Zeitrang wie die vorliegende Anmeldung hat, wird hiermit vollumfänglich in die vorliegende Anmeldung einbezogen.

Wie an sich aus dem oben angeführten Stand der Technik bekannt, kann zusätzlich eine Fördereinrichtung vorgesehen sein, durch die ein Fluid in die Auflage eingebracht werden kann bzw. durch die ein Fluid aus der Auflage ganz oder teilweise entfernt werden kann. Bei dem Fluid kann es sich um einen flüssigen oder um einen gasförmigen Stoff handeln.

Bevorzugt ist bei einem nach dem erfindungsgemäßen Verfahren hergestellten Sitz eine Einstellvorrichtung zur Veränderung der Neigung der Rückenlehne in Bezug auf die Sitzfläche vorgesehen. Der Spalt zwischen Rückenlehne und Sitzfläche ist dabei vergleichsweise klein und ist für einen Sitzbenutzer aufgrund der polsternden Auflage kaum spürbar.

In einer anderen Ausführungsform der Erfindung ist durch Einsatz einer einstückigen Tragschale die Neigung der Rückenlehne gegenüber der Sitzfläche unabänderbar vorgegeben, woraus sich ein spaltfreier Übergang ergibt, bevorzugt in Verbindung mit einer polsternden Auflage, die ebenfalls ohne Unterbrechung beide Bereiche des Sitzes bedeckt.

Sitze, die unter Verwendung einer nach dem erfindungsgemäßen Verfahren erzeugten Polsterauflage hergestellt sind, können mit einer vergleichsweise sehr dünnen Polsterauflage versehen werden und haben dennoch einen sehr guten Sitzkomfort, da die Polsterauflage aufgrund ihrer guten Passform nur geringe "Abweichungen" von der Körperform ausgleichen muss. Hieraus ergeben sich ein geringer Bauraum und ein geringes Gewicht. Der tragende Unterbau der Sitzfläche und/oder Rückenlehne des Sitzes kann hierbei weitestgehend ebenflächig sein oder eine dreidimensionale Konturierung aufweisen. Die Verwendung einer erfindungsgemäß erzeugten Tragschale als tragender Unterbau scheidet jedoch aus, da bei einer solchen Tragschale kaum mehr ein Freiraum für eine Konturierung der Polsterauflage bestünde, da die Polsterauflage wegen der Konturierung der Tragschale eine etwa gleichbleibende Dicke über ihre gesamte Flächenerstreckung aufweisen müsste.

Ein mögliches Ausführungsbeispiel der Erfindung ist in der Zeichnung dargestellt und wird nachfolgend näher erläutert. Es zeigt:
- Fig. 1: eine schematische Seitenansicht eines Sitzgestells mit einer Messmatte im Ausgangszustand,
- Fig. 2: eine der Fig. 1 entsprechende Darstellung des Sitzgestells mit der Messmatte, mit einem Probanden,
- Fig.3: eine der Fig. 1 entsprechende Darstellung, nachdem der Proband das Sitzgestell mit der Messmatte verlassen hat,
- Fig. 4: eine nach dem erfindungsgemäßen Verfahren hergestellte Tragschale,
- Fig. 5: eine perspektivische Darstellung der Überlagerung einer Mehrzahl gemessener Oberflächenkonturen,
- Fig. 6: eine Schnittdarstellung der überlagerten Oberflächenkonturen von Fig. 5 und
- Fig. 7: einen Sitz mit einer nach dem erfindungsgemäßen Verfahren hergestellten Polsterauflage.

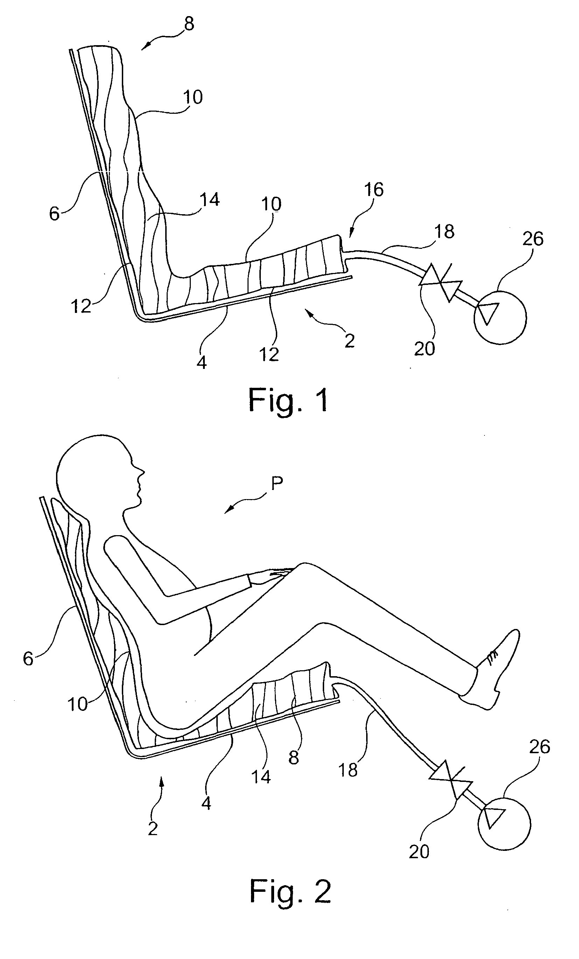

Fig. 1 zeigt ein Sitzgestell 2, auch als Sitz-Mock-up bezeichnet, mit ebenen, ungepolsterten Anlageflächen 4 und 6 für Gesäß und Rücken eines Sitzbenutzers. Auf dem Sitzgestell 2 liegt eine Messmatte 8 auf. Die Messmatte 8 hat eine luftdichte Hülle mit einer oberseitigen und einer unterseitigen Materialbahn 10 bzw. 12. Zumindest die oberseitige Materialbahn 10 ist aus einem biegeschlaffen Material gefertigt und weist eine geringe Eigensteifigkeit auf. Im Inneren der Hülle befindet sich eine Füllung 14, die beispielsweise von einer Vielzahl kleiner Kugeln mit geringer Oberflächenrauigkeit gebildet wird, die sich mit sehr geringem Kraftaufwand gegeneinander verschieben lassen. Die Messmatte 8 weist eine vergleichsweise große Menge an Füllung 14 auf, um auf den ebenen, ungepolsterten Anlageflächen 4 und 6 eine vollständige Anpassung an die Kontur eines Probanden P zu ermöglichen. Somit unterscheidet sich die Messmatte 8 in ihrer Dicke von der aus der DE 196 01 972 C2 bekannten sehr dünn ausgebildeten Messmatte.

Die Messmatte 8 weist einen Schlauchanschluss 16 mit einem Schlauch 18 auf. Über eine Absperreinrichtung 20 kann das Volumen im Inneren der Messmatte 8 hermetisch abgesperrt werden. An den Schlauch 18 ist eine Fördereinrichtung 26, beispielsweise in Form einer Pneumatikpumpe, zur Erzeugung eines Unterdrucks und/oder eines Überdrucks in der Messmatte 8 angeschlossen. Im vorliegenden Ausführungsbeispiel wird das Fluid im Inneren der Messmatte 8 in besonders einfacher Weise von Luft gebildet. Die Messmatte 8 kann jedoch auch mit einem anderen Fluid als Luft, beispielsweise mit einer ölartigen Flüssigkeit geringer Viskosität, befüllt sein.

Vor dem Einsitzen eines Probanden P gemäß Fig. 2 auf der Messmatte 8 ist die Absperreinrichtung 20 geöffnet, so dass eine Verbindung des Inneren der Messmatte 8 mit der Umgebungsluft hergestellt ist. In diesem Zustand ist die Füllung 14 im Inneren der Messmatte 8 leicht verschieblich, ähnlich einer Flüssigkeit mit geringer Viskosität. Beim Einsitzen des Probanden P wird die Füllung 14 durch den Anpressdruck des Probanden P entsprechend der Kontur des Körpers des Probanden P im Inneren der Messmatte 8 verschoben, wobei außerdem ein Teil der Luft im Inneren der Messmatte 8 über die Schlauchleitung 18 aus der Hülle verdrängt wird. Durch das Einsitzen des Probanden P wird an der oberseitigen Materialbahn 10 der Messmatte 8 ein Abbild der Kontur des Körpers des Probanden P erzeugt.

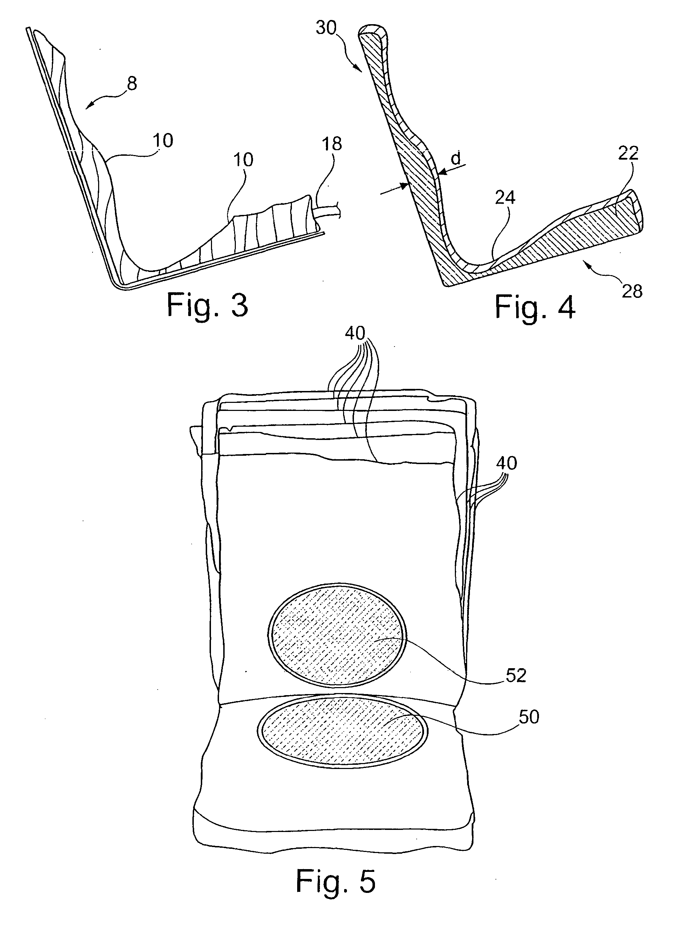

Bevor der Proband P die Messmatte 8 verlässt, wird über die Fördereinrichtung 26 (als Saugpumpe geschaltet) im Inneren der Messmatte 8 ein Unterdruck erzeugt und nachfolgend die Absperreinrichtung 20 geschlossen. Hierdurch erfolgt eine Fixierung der Füllung 14, wie in Fig. 3 dargestellt. Nach dem der Proband P die Messmatte 8 verlassen hat, wird die derart fixierte Kontur der oberseitigen Materialbahn 10 der Messmatte 8 mit einem geeigneten Messgerät erfasst. Die Daten der gemessenen Oberflächenkontur 40 (siehe Fig. 5) werden in einer Rechnereinheit abgelegt.

Nunmehr wird die Absperreinrichtung 20 geöffnet, so dass die verdrängte Luft wieder in das Innere der Messmatte 8 einströmen kann. Dadurch wird die Fixierung der Füllung 14 aufgehoben. Dieser Effekt kann durch Einbringen eines geringen Überdrucks durch die Fördereinrichtung 26 (als Druckpumpe geschaltet) in die Messmatte 8 verstärkt werden. Zur Vorbereitung der nächsten Einsitzmessung wird nunmehr die Füllung 14 gleichmäßig verteilt und somit die Messmatte 8 wieder in ihre in Fig. 1 dargestellte Ausgangslage gebracht. Anschließend kann die Einsitzmessung mit dem nächsten Probanden P folgen.

Nach einer Mehrzahl von Einsitzmessungen mit unterschiedlichen Probanden P werden die gemessenen dreidimensionalen Oberflächenkonturen 40 der verformten Messmatte 8 durch rechnerische Überlagerung gemittelt und hieraus die gemittelte Oberflächenkontur einer idealisierten Tragschale 22 abgeleitet, die für alle zuvor an den Einsitzmessungen beteiligten Probanden P eine geeignete "Passform" aufweist, sowohl im Bereich der Sitzfläche 28 als auch im Bereich der Rückenlehne 30. Sofern mit den Einsitzmessungen das gesamte Spektrum der in Frage kommenden Sitzbenutzer abgedeckt wurde, steht nunmehr eine Tragschale 22 für einen Sitz zur Verfügung, die an alle in Frage kommenden Sitzbenutzer angepasst ist. Wird die derart erzeugte Tragschale 22 anschließend mit einer vergleichsweise dünnen polsternden Auflage 24 versehen, steht ungeachtet der nur dünnen Auflage 24 ein Sitz mit großem Sitzkomfort zur Verfügung, der sich durch eine nur geringe Gesamtdicke d von Tragschale 22 und Auflage 24 auszeichnet.

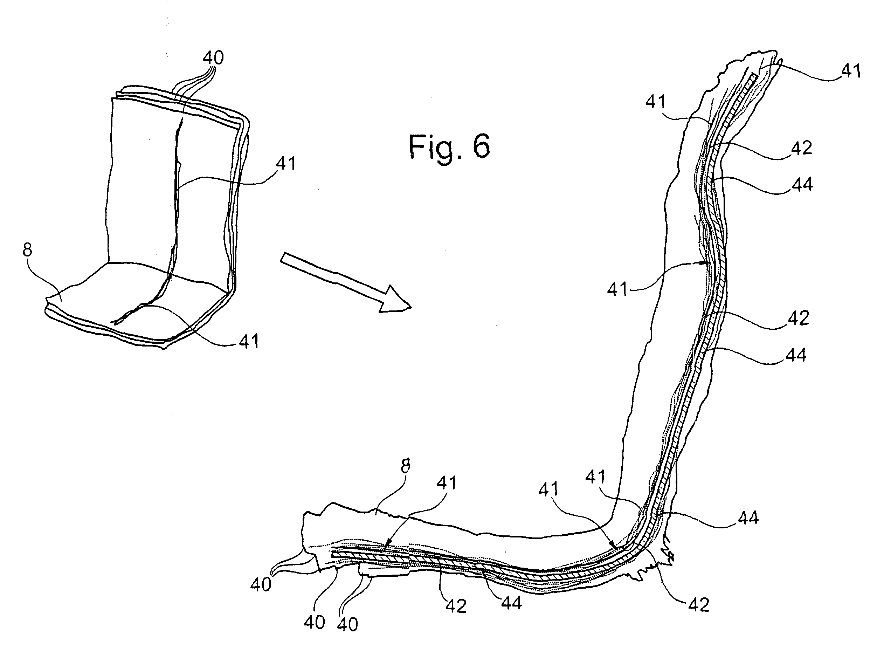

Die Fig. 5 und 6 zeigen die Überlagerung einer Mehrzahl gemessener Oberflächenkonturen (Scans) 40, die im vorliegenden Ausführungsbeispiel auf Einsitzmessungen mit etwa 30 Probanden P zurückgehen. Die einzelnen Scans 40 sind in unterschiedlichen Graustufen dargestellt. Für das Ausrichten der Scans 40 zum Zweck der Überlagerung wird aus der gesamten Anlagefläche mit einem Sitzbenutzer ein Bereich ausgewählt, für den eine vergleichsweise kleine zulässige Abstandstoleranz der gemessenen Scans 40 definiert wird. Hierfür eignen sich die in Fig. 5 gekennzeichneten Bereiche 50 oder 52 in besonderer Weise. Der Bereich 50 repräsentiert hierbei die Gesäßmulde, während der Bereich 52 dem unteren Abschnitt des Rückens entspricht.

Fig. 6 zeigt einen Schnitt durch die Mittelebene der überlagerten Scans 40. Die perspektivische Darstellung der überlagerten Scans 40 im linken oberen Bereich der Fig. 6 verdeutlicht die Lage der Mittelebene anhand der hell dargestellten Schnittlinien 41 der einzelnen Scans 40. In der vergrößerten Schnittdarstellung der Fig. 6 sind diese Schnittlinien 41 ebenfalls mit einer Vielzahl heller Linien wiedergegeben, während die Konturen der Messmatte 8 aus den verschiedenen Einsitzmessungen in dunklen Grautönen erscheinen. Die Schnittlinien 41 setzen sich aus einer Vielzahl einzelner Messpunkte zusammen.

Aus der rechnerischen Mittelung der Schnittlinien 41 (maßgebend ist die Dichte der Messpunkte der einzelnen Schnittlinien 41) ergibt sich die mit dünner Strichstärke dargestellte gemittelte Konturlinie 42. Diese gemittelte Konturlinie 42 wird mit einem Offset in Richtung "großer Sitzbenutzer" versehen, woraus sich eine "modifizierte Konturlinie" 44, dargestellt in großer Strichstärke, ergibt.

Neben den beispielhaft dargestellten Konturlinien 42 und 44 in der Mittelebene der Scans 40 wird - in Breitenrichtung des Sitzes betrachtet - eine große Anzahl weiterer Konturlinien 42 und 44 errechnet, so dass sich aus den Einsitzmessungen und den nachfolgenden Berechnungen aus den einzelnen Konturlinien 42 eine gemittelte dreidimensionale Oberflächenkontur 42 und eine modifizierte dreidimensionale Oberflächenkontur 44 über die gesamte Breite von Sitzfläche 28 und Rückenlehne 30 der Tragschale 22 ergibt.

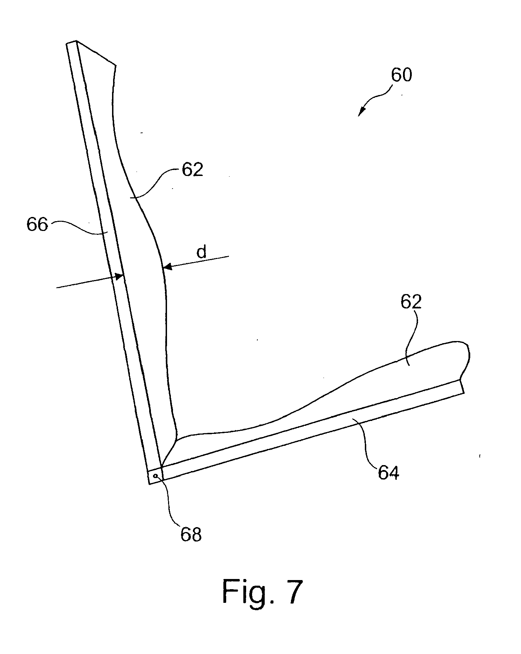

Fig. 7 zeigt einen Sitz 60, der auf einem nicht oder nur wenig konturierten tragenden Unterbau von Sitzfläche 64 und Rückenlehne 66 jeweils eine konturierte Polsterauflage 62 aufweist. Die Polsterauflagen 62 sind analog dem oben beschriebenen Verfahren erzeugt und zeichnen sich durch eine für alle in Frage kommenden Sitzbenutzer sehr gute Passform aus. Dadurch kann die Dicke d der Polsterauflagen 62 vergleichsweise gering bemessen werden. Zwischen Sitzfläche 64 und Rückenlehne 66 ist ein Schwenkgelenk 68 zur Veränderung des Neigungswinkels der Rückenlehne 66 gegenüber der Sitzfläche 64 vorgesehen.

Zusammenfassend lässt sich die Erfindung wie folgt beschreiben: Es wird ein Verfahren zur Erzeugung einer Tragschale 22 für einen Sitz vorgeschlagen. Hierbei werden in einer Messreihe mit einer Mehrzahl von Probanden P Einsitzmessungen vorgenommen, wobei die Probanden P auf einer Messmatte 8 Platz nehmen, die auf ein neutrales Sitzgestell 2 aufgelegt ist. Die Messmatte 8 hat eine leicht verschiebliche Füllung 14 und gleicht sich an die Körperkontur des jeweiligen Probanden P an. Nach dem Einsitzen und bevor der Proband P die Messmatte 8 verlässt, wird die Füllung 14 im Inneren der Messmatte 8 durch Anlegen eines Unterdrucks fixiert. Die geometrischen Daten der Oberflächenkontur 40 der Messmatte 8 werden für jeden Probanden P ermittelt und gespeichert. Abschließend werden die gemessenen Oberflächenkonturen 40 überlagert. Hieraus entsteht eine gemittelte Oberflächenkontur 42, die zur Anpassung an große Sitzbenutzer nachfolgend noch geringfügig abgeändert werden kann, so dass eine modifizierte Oberflächenkontur 44 entsteht, als Grundlage für die Herstellung der Tragschale 22 des Sitzes. Da die Oberflächenkontur 42 bzw. 44 zu allen in Frage kommenden Sitzbenutzern recht gut passt, ist bereits eine vergleichsweise dünne polsternde Auflage 24 auf der Tragschale 22 ausreichend, um für verschiedene Sitzbenutzer einen sehr guten Sitzkomfort zu erreichen. Außerdem wird ein Verfahren zur Erzeugung einer Polsterauflage 62 für einen Sitz 60 mit nicht oder mit nur gering konturiertem tragendem Unterbau 64, 66 vorgeschlagen, analog zum oben beschriebenen Verfahren zur Erzeugung einer Tragschale 22.

## Patentansprüche

1. Verfahren zur Erzeugung einer Tragschale (22) für einen Sitz für ein Fahrzeug, die den tragenden Unterbau für eine Sitzfläche und/oder eine Rückenlehne des Sitzes bildet, wobei der Sitz zusätzlich zur Tragschale (22) wenigstens eine Auflage (24) aufweist, mit den folgenden Schritten:
a) Bereitstellung einer Messmatte (8) auf einem Sitzgestell (2), das eine ebene, ungepolsterte Anlagefläche (4, 6) im Bereich der Sitzfläche und/oder der Rückenlehne aufweist, wobei die Messmatte (8) räumlich flexibel ist, eine geringe Eigensteifigkeit besitzt und in einem beliebigen Verformungszustand fixiert werden kann,
b) Einsitzen eines Probanden (P) in die Messmatte (8) in einer Haltung, die der Sitzhaltung in dem Fahrzeug entspricht,
c) Ausführen von Bewegungen durch den Probanden (P) während des Einsitzens, die üblichen Bewegungen während des Aufenthalts im Fahrzeug und/oder während des Betriebs des Fahrzeugs entsprechen,
d) Fixieren der durch das Einsitzen erzeugten Oberflächenkontur der Messmatte (8),
e) Erfassen der geometrischen Daten der Oberflächenkontur der Messmatte (8),
f) Aufheben der Fixierung der Oberflächenkontur der Messmatte (8),
g) Durchführung der Schritte b) bis f) mit unterschiedlichen Probanden (P) und
h) Überlagerung der Oberflächenkonturen (40) aus den Messungen mit den unterschiedlichen Probanden (P) und hieraus Ableitung der Oberflächenkontur der Tragschale (22).

2. Verfahren zur Erzeugung einer Polsterauflage (62) für einen Sitz (60) für ein Fahrzeug, die zur Auflage auf einen tragenden Unterbau für eine Sitzfläche (64) und/oder eine Rückenlehne (66) des Sitzes (60) bestimmt ist, mit den folgenden Schritten:
a) Bereitstellung einer Messmatte (8) auf einem Sitzgestell (2), das eine ebene, ungepolsterte Anlagefläche (4, 6) im Bereich der Sitzfläche und/oder der Rückenlehne aufweist, wobei die Messmatte (8) räumlich flexibel ist, eine geringe Eigensteifigkeit besitzt und in einem beliebigen Verformungszustand fixiert werden kann,
b) Einsitzen eines Probanden (P) in die Messmatte (8) in einer Haltung, die der Sitzhaltung in dem Fahrzeug entspricht,
c) Ausführen von Bewegungen durch den Probanden (P) während des Einsitzens, die üblichen Bewegungen während des Aufenthalts im Fahrzeug und/oder während des Betriebs des Fahrzeugs entsprechen,
d) Fixieren der durch das Einsitzen erzeugten Oberflächenkontur der Messmatte (8),
e) Erfassen der geometrischen Daten der Oberflächenkontur der Messmatte (8),
f) Aufheben der Fixierung der Oberflächenkontur der Messmatte (8),
g) Durchführung der Schritte b) bis f) mit unterschiedlichen Probanden (P) und
h) Überlagerung der Oberflächenkonturen (40) aus den Messungen mit den unterschiedlichen Probanden (P) und hieraus Ableitung der Oberflächenkontur der Polsterauflage (62).

3. Verfahren nach Anspruch 1 oder 2,
**dadurch gekennzeichnet, dass** der Proband (P) Bewegungen ausführt, die ein Fahrzeuglenker zur Erfüllung einer Fahraufgabe vollführen muss, wie Lenken, Gas geben, Bremsen etc.

4. Verfahren nach einem der vorangegangenen Ansprüche,
**dadurch gekennzeichnet, dass** zur Überlagerung der gemessenen Oberflächenkonturen (40) ein bestimmter Abschnitt (50, 52) der Sitzanlagefläche der Probanden (P) mit dem Sitz festgelegt wird, an dem die gemessenen Oberflächenkonturen (40) ausgerichtet werden, wobei die Festlegung dieses Abschnitts (50, 52) nach dem Kriterium einer möglichst geringen Abweichung der geometrischen Form und der Raumkoordinaten erfolgt.

5. Verfahren nach Anspruch 4,
**dadurch gekennzeichnet, dass** der festgelegte Abschnitt (50) der Gesäßbereich oder der Bereich (52) des unteren Rückens ist.

6. Verfahren nach einem der vorangegangenen Ansprüche,
**dadurch gekennzeichnet, dass** die Überlagerung der gemessenen Oberflächenkonturen (40) im festgelegten Abschnitt (50. 52) nach einem "best-fit"-Verfahren erfolgt.

7. Verfahren nach einem der vorangegangenen Ansprüche,
**dadurch gekennzeichnet, dass** nach der Überlagerung der gemessenen Oberflächenkonturen (40) eine arithmetische Mittelung erfolgt, woraus eine mittlere Oberflächenkontur (42) entsteht.

8. Verfahren nach Anspruch 7,
**dadurch gekennzeichnet, dass** die mittlere Oberflächenkontur (42) aufgeweitet wird, woraus eine modifizierte Oberflächenkontur (44) entsteht.

9. Sitz, mit einer nach Anspruch 1 oder nach einem der Ansprüche 3 bis 8 erzeugten Tragschale (22), wobei die Tragschale (22) auf ihrer dem Sitzbenutzer zugewandten Seite mit wenigstens einer Auflage (24) mit polsternden Eigenschaften versehen ist.

10. Sitz nach Anspruch 9,
**dadurch gekennzeichnet, dass** die Auflage (24) gebildet wird von
- einem Abstandsgebilde, dessen parallel zueinander angeordnete Gewirkelagen durch Abstandsfäden miteinander verbunden sind,
- einer fluiddichte Hülle zur Aufnahme des Abstandsgebildes, wobei die Hülle im Wesentlichen aus zwei etwa parallel zueinander angeordneten Materialbahnen besteht, die an ihren seitlichen Randbereichen miteinander verbunden sind und
- wenigstens einer Schlauchleitung, über die die Menge des Fluids im Inneren der Hülle beeinflussbar ist.

11. Sitz nach Anspruch 9 oder 10,
**dadurch gekennzeichnet, dass** eine Fördereinrichtung vorgesehen ist, durch die ein Fluid in die Auflage (24) eingebracht werden kann bzw. durch die ein Fluid aus der Auflage (24) entfernt werden kann.

12. Sitz (60), mit einer nach einem der Ansprüche 2 bis 8 erzeugten Polsterauflage (62), die auf einem tragenden Unterbau einer Sitzfläche (64) und/oder einer Rückenlehne (66) des Sitzes (60) angeordnet ist, wobei der tragende Unterbau in einer von dem Verfahren gemäß Anspruch 1 oder in einer von dem Verfahren gemäß einem der Ansprüche 3 bis 8 abweichenden Weise erzeugt ist.

## Claims

1. A method of producing a supporting shell (22) for a seat for a motor vehicle, the shell forming a substructure for bearing a seat surface and/or a back rest of the seat, wherein the seat has at least one cover (24) in addition to the shell (22), the method having the following steps:
a) preparing a measuring mat (8) on a seat frame (2) which has a flat non-upholstered surface (4, 6) in the region of the seat surface and/or the back rest, wherein the mat (8) is flexible in three dimensions, has low natural stiffness and can be fixed in any desired shape,
b) insertion of a test person (P) into the mat (8) in an attitude corresponding to the sitting position in the vehicle,
c) when sitting down, the test person (P) moves in a way corresponding to the normal movements when In a vehicle and/or while driving the vehicle,
d) the surface contour of the mat (8) resulting from sitting down is fixed,
e) the geometrical data of the surface contour of the mat (8) are recorded,
f) the means fixing the surface contour of the mat (8) are removed,
g) steps b) to f) are repeated, using different test persons (P), and
h) the surface contours (40) obtained from measurements on the various test persons (P) are superposed, thus obtaining the surface contour of the shell (22).

2. A method of producing a padded support (62) for a seat (60) for a vehicle, adapted to be placed on a substructure for bearing a surface (64) and/or a back rest (66) of a seat (60), the method having the following steps:
a) preparing a measuring mat (8) on a seat frame (2) which has a flat non-upholstered surface (4, 6) in the region of the seat surface and/or the back rest, wherein the mat (8) is flexible in three dimensions, has low natural stiffness and can be fixed in any desired shape.
b) insertion of a test person (P) into the mat (8) in an attitude corresponding to the sitting position in the vehicle.
c) when sitting down, the test person (P) moves in a way corresponding to the normal movements when in a vehicle and/or while driving the vehicle,
d) the surface contour of the mat (8) resulting from sitting down is fixed,
e) the geometrical data of the surface contour of the mat (8) are recorded,
f) the means fixing the surface contour of the mat (8) are removed,
g) steps b) to f) are repeated, using different test persons (P), and
h) the surface contours (40) obtained from measurements on the various test persons (P) are superposed, thus obtaining the surface contour of the shell (22).

3. A method according to claim 1 or claim 2,
**characterised in that** the test person (P) makes the movements required by a driver, such as steering, accelerating, braking, etc.

4. A method according to any of the preceding claims,
**characterised in that** in order to superpose the measured surface contours (40), a portion (50, 52) of the seat surface for the test person (P) is defined, together with the seat on which the measured surface contours (40) are aligned, wherein that portion (50, 52) is defined which deviates to the minimum extent from the geometrical shape and the three-dimensional co-ordinates.

5. A method according to claim 4,
**characterised in that** the defined portion (50) is the seat region or the lower back region (52).

6. A method according to any of the preceding claims,
**characterised in that** the measured surface contours (40) in the defined portion (50, 52) are superposed by a "best-fit" method.

7. A method according to any of the preceding claims,
**characterised in that** superposition of the measured surface contours (40) is followed by arithmetical averaging, yielding a mean surface contour (42).

8. A method according to claim 7,
**characterised In that** the mean surface contour (42) is widened, producing a modified surface contour (44).

9. A seat comprising a supporting shell (22) according to claim 1 or according to any of claims 3 to 8, wherein the side of the shell (22) facing the seat user is given an upholstered cover (24).

10. A seat according to claim 9,
**characterised in that** the cover (24) is formed by
- a spacing structure having parallel weft layers connected by spacing threads,
- a fluid-tight jacket for holding the spacing structure, wherein the jacket substantially comprises two approximately parallel webs of material connected together at their lateral edge regions, and
- at least one hose pipe for varying the amount of fluid in the jacket.

11. A seat according to claim 9 or 10, **characterised in that** a conveying device is provided for introducing a fluid into the cover (24) or withdrawing fluid from the cover (24).

12. A seat (60) comprising a padded support (62) produced according to any of claims 2 to 8 and disposed on a substructure bearing a surface (64) and/or a back (66) of the seat (60), wherein the bearing substructure is produced in a manner differing from the method according to claim 1 or from the method according to any of claims 3 to 8.

## Revendications

1. Procédé d'obtention d'une coque support (22) pour un siège de véhicule qui forme l'infrastructure portante de la surface d'assise et/ou du dossier du siège, ce siège comportant, outre la coquille support (22), au moins un rembourrage (24), comportant les étapes consistant à :
a) préparer un matelas de mesure (8) sur un châssis de siège (2) qui comporte une surface d'appui plane non rembourrée (4, 6) dans la zone de la surface d'assise et/ou du dossier, ce matelas de mesure (8) étant flexible, dans les trois dimensions présentant une faible rigidité propre et pouvant être fixé dans un état de déformation quelconque,
b) positionnement en position assise d'un expérimentateur (P) dans le matelas de mesure (8), dans une position qui correspond à la position d'assise dans le véhicule,
c) mise en oeuvre par l'expérimentateur (P) pendant son positionnement en position assise de mouvements correspondants aux mouvements usuels pendant le séjour dans le véhicule et/ou pendant le fonctionnement du véhicule,
d) fixation du contour surfacique du matelas de mesure (8) obtenu lors du positionnement en position assise,
e) détection des données géométriques du contour surfacique du matelas de mesure (8),
f) suppression de la fixation du contour surfacique du matelas de mesure (8),
g) mise en oeuvre des étapes b) à f) avec différents expérimentateurs (P), et
h) recouvrement des contours surfaciques (40) issus des mesures effectuées avec différents expérimentateurs (P) et déduction du contour surfacique de la coquille support (22).

2. Procédé d'obtention d'un coussin de rembourrage (62) pour un siège (60) de véhicule qui est destiné à être appliqué sur une infrastructure portante de la surface d'assise (64) et/ou du dossier (66) du siège (60) comportant les étapes consistant à :
a) préparer un matelas de mesure (8) sur un châssis de siège (2) qui comporte une surface d'appui (4, 6) plane non rembourrée dans la zone d'assise et/ou du dossier, ce matelas de mesure (8) étant flexible, dans les trois dimensions présentant une faible rigidité propre et pouvant être fixé dans un état de déformation quelconque,
b) positionnement en position assise d'un expérimentateur (P) dans le matelas de mesure (8) dans une position qui correspond à la position d'assise dans le véhicule,
c) mise en oeuvre par l'expérimentateur (P) pendant son positionnement en position assise de mouvements qui correspondant aux mouvements habituels pendant le séjour dans le véhicule et/ou pendant le fonctionnement du véhicule,
d) fixation du contour surfacique du matelas de mesure (8) obtenu lors du positionnement en position assise,
e) détection des données géométriques du contour surfacique du matelas de mesure (8),
f) suppression de la fixation du contour surfacique du matelas de mesure (8),
g) mise en oeuvre des étapes b) à f) avec différents expérimentateurs (P), et
h) recouvrement des contours surfaciques (40) issus des mesures effectuées avec différents expérimentateurs (P) et déduction du contour surfacique du coussin de rembourrage (62).

3. Procédé conforme à la revendication 1 ou 2,
**caractérisé en ce que**
l'expérimentateur (P) exécute des mouvements qu'un conducteur de véhicule pour mettre en oeuvre des opérations de conduite telles que braquage, accélération, freinage etc...

4. Procédé conforme à l'une des revendications précédentes,
**caractérisé en ce que**
pour recouvrir les contours surfaciques (40) mesurés on définit un segment déterminé (50, 52) de la surface d'assise de l'expérimentateur (P) sur le siège, sur lequel sont alignés les contours surfaciques (40) mesurés, la définition de ce segment (50, 52) étant effectuée selon le critère d'un écart aussi faible que possible de la forme géométrique et des coordonnées spaciales.

5. Procédé conforme à la revendication 4,
**caractérisé en ce que**
le segment déterminé (50) est la zone d'assise ou la zone (52) de la partie inférieure du dos.

6. Procédé conforme à l'une des revendications précédentes,
**caractérisé en ce que**
le recouvrement du contour surfacique mesuré (40) dans le segment déterminé (50, 52) est effectué selon le procédé « best-fit ».

7. Procédé conforme à l'une des revendications précédentes,
**caractérisé en ce qu'**
après le recouvrement des contours surfaciques mesurés (40) on effectue une moyenne arithmétique de façon à obtenir un contour surfacique moyen (42).

8. Procédé conforme à la revendication 7,
**caractérisé en ce que**
le contour surfacique moyen (42) est élargi, de façon à obtenir un contour surfacique modifié (44).

9. Siège comportant une coquille support (22) obtenue conformément à la revendication 1 ou conformément à l'une des revendications 3 à 8, dans lequel la coquille support (22) est équipée, sur sa face tournée vers l'utilisateur du siège d'au moins un coussin (24) ayant des propriétés de rembourrage.

10. Siège conforme à la revendication 9,
**caractérisé en ce que**
le coussin (24) est formé par :
- une structure d'écartement dont les couches de tissu disposées parallèlement les unes aux autres sont reliées entre elles par des fils d'écartement,
- une gaine étanche aux fluides pour la réception de la structure d'écartement, cette gaine étant essentiellement constituée de deux nappes de tissu disposées parallèlement l'une à l'autre qui sont reliées entre elles au niveau de leurs bords latéraux, et
- au moins un tuyau par lequel la quantité de fluide à l'intérieur de la gaine peut être modifiée.

11. Siège conforme à la revendication 9 ou 10,
**caractérisé en ce qu'**
il est prévu un dispositif d'alimentation permettant d'introduire un fluide dans le coussin (24), ou d'extraire un fluide de ce coussin (24).

12. Siège (60) comportant un coussin de rembourrage (62) obtenu conformément à l'une des revendications 2 à 8, qui est disposé sur une infrastructure portante de la surface d'assise (64) et/ou du dossier (66) du siège (60), cette infrastructure portante étant obtenue d'une manière différentes du procédé conforme à la revendication 1 ou du procédé conforme à l'une des revendications 3 à 8.
